# EUROPEAN PATENT APPLICATION

(11) **EP 3 547 174 A1**
(43) Date of publication of application: **02.10.2019**
(21) Application number: 19161500.4
(22) Date of filing: 08.03.2019
(51) Int. Cl.: G06F 17/50

(54) **CROSS-SECTION EXTRACTION FOR VORTEX DETECTION**

(30) Priority: 28.03.2018 GB 201805001
(71) Applicant: Rolls-Royce plc, London SW1E 6AT (GB)
(72) Inventor: Ke, Yiping, Derby, Derbyshire DE24 8BJ (GB); Leonardi, Erwin, Derby, Derbyshire DE24 8BJ (GB); Liu, Jigang, Derby, Derbyshire DE24 8BJ (GB); Sha, Mo, Derby, Derbyshire DE24 8BJ (GB); Menzies, Kevin, Derby, Derbyshire DE24 8BJ (GB)
(74) Representative: Rolls-Royce plc

(57) **Abstract**

A method of extracting cross-sections for performing vortex detection in a flow volume is provided. The method includes the steps of: (i) providing a simulated flow field for a meshed volume, the flow field providing discrete values of a selected flow parameter at respective positions distributed throughout the volume as determined by the meshing of the volume, the selected flow parameter being one of Q-criterion, vorticity magnitude, velocity magnitude and lambda2; (ii) calculating, for each position, a direction of slowest change of the selected flow parameter; (iii) identifying one or more of the positions for 2D cross-section extraction; and (iv) extracting for the, or each, identified position a respective 2D cross-section from the volume, the extracted cross-section containing the respective identified position and being perpendicular to the calculated direction of slowest change at the respective identified position.

## Description

### Field of the Present Disclosure

The present disclosure relates to a method of extracting cross-sections for performing vortex detection in a flow volume.

### Background

Computational Fluid Dynamics (CFD) is an essential tool in aerodynamic design. As CFD methods have become more sophisticated and increased computational power has become available, it is possible to simulate more complex flows and geometries with increasing reliability. However, as the simulated flow becomes more complex, the task of obtaining useful information and insight into the flow behaviour from the large quantities of CFD data becomes increasingly difficult and time-consuming. As a result, more automated methods to reduce the post-processing burden are attractive, including the ability to detect flow features of interest. One common requirement is to understand the behaviour and location of vortices in the flow field since these can have a significant effect on flow mixing and pressure loss. There is no universally accepted definition of a vortex and so existing vortex detection methods often rely on heuristics based on physical properties of the flow. These properties typically include high vorticity, high helicity, local low pressure, the swirling nature of the flow around vortex cores, complex eigenvalues of the velocity gradient tensor, etc. The extraction of a two-dimensional (2D) cross-section is a crucial process in some vortex detection methods. Moreover, 2D cross-section extraction is useful for the CFD user to analyse complex aerodynamic behaviour on an appropriate plane. Having extracted a 2D cross-section, vortices can be identified on the section using known techniques, e.g. as described in L. Graftieaux, M. Michard, and N. Grosjean, Combining PIV, POD and vortex identification algorithms for the study of unsteady turbulent swirling flows, Measurement Science and Technology, vol. 12, pp1422-1429 (2001).

The vorticity vector of the velocity gradient tensor is commonly used to extract a 2D cross-section whose normal is parallel to this vector. Thus R.C. Strawn, D.N. Kenwright, and J. Ahmad, Computer Visualization of Vortex Wake Systems, AIAA J., 37(4): pp. 511-512, 1999 defined a vortex core as a local maximum of vorticity magnitude in the plane normal to vorticity. In this method, a 2D cross-section is first extracted, the cross-section being perpendicular to the vorticity vector, which is a local approximation to the vortex core direction vector.

Alternatively, D. Sujudi and R. Haimes, Identification of swirling flow in 3-D vector fields, 12th AIAA Computational Fluid Dynamics Conference, and Open Forum. San Diego, pp. 792-799, 1995 developed a vortex core line detection algorithm based on the eigenvectors of the velocity gradient tensor. In particular, they proposed that the real eigenvector points in the direction about which the flow spirals, and the plane normal to this eigenvector defines the plane on which the flow spirals.

Although, the vorticity vector is applicable for 2D cross-section extraction on shear-free flows, in regions close to a surface, viscous effects generate vorticity, and this cannot be distinguished from the vorticity produced by a near-wall vortex, making it unreliable for 2D cross-section extraction.

Like the vorticity vector approach, the real eigenvector approach provides a local approximation to the vortex core direction vector, and may not work well for complex flow data. In particular, it struggles to capture weak vortices, characterized by slow rotation and low velocity magnitudes.

It would be desirable to have an alternative approach for cross-section extraction.

### Summary

The present disclosure is at least partly based on a recognition that in a range of different CFD datasets certain flow parameters, such as Q-criterion, vorticity magnitude, velocity magnitude and lambda2, have slowest rates of change along the direction normal to the 2D cross-section on which vortices can be best visualized.

Accordingly, in a first aspect, the present disclosure provides a method of extracting cross-sections for performing vortex detection in a flow volume, the method including the steps of:
(i) providing a simulated flow field for a meshed volume, the flow field providing discrete values of a selected flow parameter at respective positions distributed throughout the volume as determined by the meshing of the volume, the selected flow parameter being one of Q-criterion, vorticity magnitude, velocity magnitude and lambda2;
(ii) calculating, for each position, a direction of slowest change of the selected flow parameter;
(iii) identifying one or more of the positions for 2D cross-section extraction; and
(iv) extracting for the, or each, identified position a respective 2D cross-section from the volume, the extracted cross-section containing the respective identified position and being perpendicular to the calculated direction of slowest change at the respective identified position.

The method can be usefully applied to extract 2D cross-sections for detecting vortices in a wide variety of situations, but has particular utility in understanding instabilities caused by complex flows in gas turbine engines, such as vortex generation in the intake to the fan of a turbofan engine. Moreover, the method can improve the speed and efficiency of engine development.

In a second aspect, the present disclosure provides a process for performing vortex detection in a flow volume, the process including:
performing the method of the first aspect; and
detecting vortices in the, or each, extracted cross-section.

The process can thus be used for simulating the aerodynamic performance of a gas turbine engine or a part thereof. Alternatively or additionally, the process can be used for developing an improved or optimal configuration of one or more components of the gas turbine engine. Subsequently, one or more components having such an improved or optimal configuration can be fabricated. The method of extracting cross-sections for performing vortex detection can thus form an essential part of a fabrication process, preceding actual production.

The method of the first aspect is typically computer-implemented. Accordingly, further aspects of the present disclosure provide: a computer program comprising code which, when the code is executed on a computer, causes the computer to perform the method of the first aspect; a computer readable medium storing a computer program comprising code which, when the code is executed on a computer, causes the computer to perform the method of the first aspect; and a data processing system comprising one or more processors adapted to perform the method of the first aspect. For example, a data processing system can be provided for extracting cross-sections for performing vortex detection in a simulated flow field for a meshed volume, the flow field providing discrete values of a selected flow parameter at respective positions distributed throughout the volume as determined by the meshing of the volume, the selected flow parameter being one of Q-criterion, vorticity magnitude, velocity magnitude and lambda2, the system including one or more processors configured to: (i) calculate, for each position, a direction of slowest change of the selected flow parameter; (ii) identify one or more of the positions for 2D cross-section extraction; and (iii) extract for the, or each, identified position a respective 2D cross-section from the volume, the extracted cross-section containing the respective identified position and being perpendicular to the calculated direction of slowest change at the respective identified position. The system thus corresponds to the method of the first aspect. The system may further include: a computer-readable medium operatively connected to the processors, the medium storing the simulated flow field for the meshed volume. The system may further include: a display device for displaying the, or each, extracted 2D cross-section. Vortex detection can thus be performed on the display device.

Optional features of the present disclosure will now be set out. These are applicable singly or in any combination with any aspect of the present disclosure.

Typically, in step (i), the simulated flow field may provide discrete values of flow velocity at the positions, the selected flow parameter being calculated from the flow velocity.

The method may include a preliminary step of performing a computational fluid dynamics simulation to provide the simulated flow field.

Conveniently, in step (ii), the direction of slowest change may be calculated for each position by performing the sub-steps of:
(ii-a) determining , within 3D space, a primary direction of fastest change of the selected flow parameter;
(ii-b) defining a plane perpendicular to the primary direction of fastest change;
(ii-c) identifying, within the plane, a secondary direction of fastest change of the selected flow parameter; and
(ii-d) defining the direction of slowest change such that it is perpendicular to the primary and secondary directions of fastest change.

In sub-step (ii-a), the primary direction of fastest change may be determined by best-fitting, e.g. by principal component analysis, to plural local estimates for the primary direction of fastest change. In sub-step (ii-a), the local estimates may be obtained for respective neighbour cells of the meshed volume, the neighbour cells each having a vertex at the respective position.

Similarly, in sub-step (ii-c), the secondary direction of fastest change may be determined by best-fitting, e.g. by principal component analysis, to plural local estimates for the secondary direction of fastest change. In sub-step (ii-c), the local estimates may be obtained for respective neighbour cells of the meshed volume, the neighbour cells each having a vertex at the respective position.

In step (iii), the one or more identified positions may be the positions from the volume having the lowest magnitude(s) of the rate of change of the selected flow parameter along the direction of slowest change.

### Brief Description of the Drawings

Embodiments of the present disclosure will now be described by way of example with reference to the accompanying drawings in which:
Figure 1 shows a longitudinal cross-section through a ducted fan gas turbine engine;
Figure 2 shows four neighbour cells in a 2D plane;
Figure 3A shows eight neighbour cells in 3D space;
Figure 3B shows intersection points representing a non-directional, cell-based gradient of the highlighted cell of Figure 3A; and
Figure 3C illustrates the performance of Principal Component Analysis on the intersection points for the eight neighbour cells of Figure 3A.

### Detailed Description and Further Optional Features

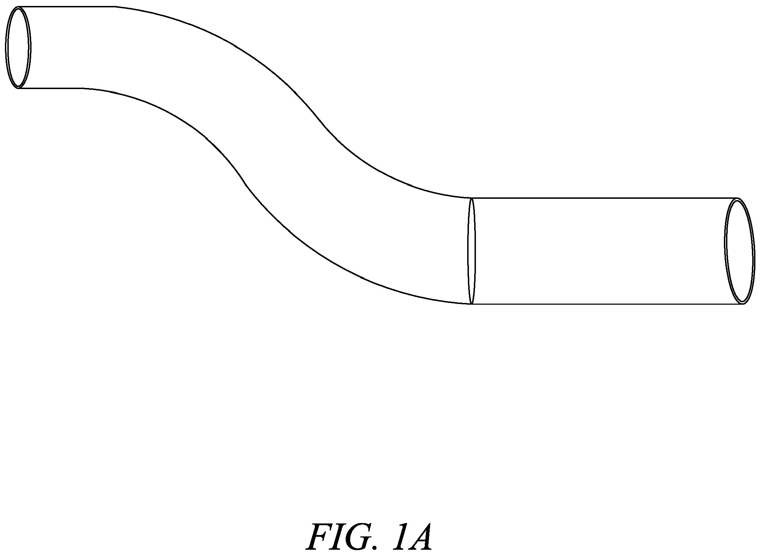

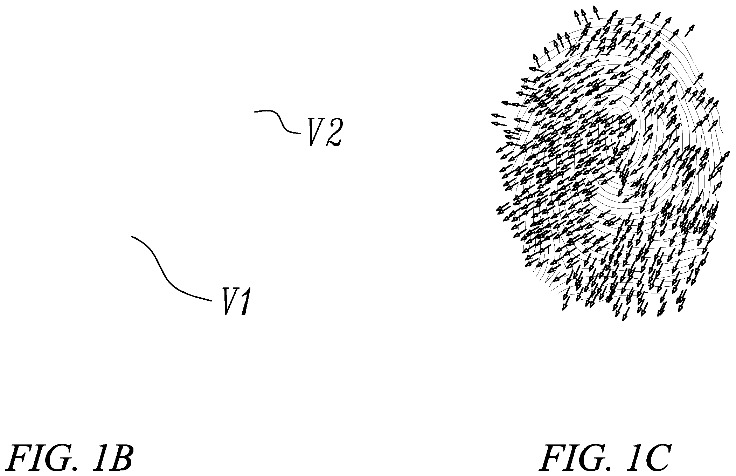

Figure 1A shows an S-shape intake duct, as described by E. Garnier, M. Leplar, J.C. Monnier and J. Delva, Flow control by pulsed jet in a highly bended S-duct, 6th AIAA Flow Control Conference, Paper No. AIAA-2012-3250, 2012. A 2D cross-section extraction was implemented by using real eigenvector of velocity gradient tensor as the normal vector to cross-section. A 2D cross-section whose normal vector is along the X-axis was manually extracted at x=0.5766, as shown in Figure 1B. On this 2D cross-section, two obvious vortices (V1) at the bottom and another two (V2) close to the solid walls are indicated by streamlines and a darker grey shading. This 2D cross-section is considered as the ground-truth cross-section. Figure 1C shows the normal vectors derived by the real eigenvector method in the bottom left V1 vortex region. The vectors are coloured by an angle value defined as the angle from the ground-truth cross-section and the normal vector calculated by the real eigenvector method. The redder the arrow is, the better the normal vector is. Figure 1C shows that the real eigenvector method does not work well in this case.

In contrast, the proposed method of the present disclosure is based on an interesting phenomenon of some flow parameters (such as Q-criterion, vorticity magnitude, velocity magnitude and lambda2) observed in a range of different types of CFD datasets, such as the S-shaped intake duct described above, a Vatistas analytic vortex model (G. Vatistas and V. Kozel, A simpler model for concentrated vortices, Experiments in Fluids, vol. 11, no. 5, pp73-76, 1991), and a cylinder in cross-flow (H. Schlichting, Boundary Layer Theory, 7th edition, McGraw-Hill, 1979). On datasets based on these parameters, the slowest change of each of parameter is always along the direction normal to the 2D cross-section on which vortices can be best visualized.

Taking Q-criterion for example (although the following applies also to vorticity magnitude, velocity magnitude and lambda2), it can be computationally difficult to identify the slowest change direction of Q-criterion directly at each position in the meshed volume of a simulated flow field. Therefore it is convenient to calculate directions of fastest change instead. The proposed 2D cross-section extraction method can thus consist of two main steps. In the first step, a primary fastest change direction of Q-criterion in the 3D space is calculated, for example using cell-based gradients and the Principal Component Analysis (PCA) technique. A plane normal to the primary fastest change direction of Q-criterion is then defined. In the second step, a secondary fastest change direction of Q-criterion on the derived plane is computed. The slowest change direction of Q-criterion is then taken as being perpendicular to the plane defined by the primary and secondary fastest change directions. Having determined the slowest change direction of Q-criterion at a given position in this way, the magnitude of the rate of change of Q-criterion (if needed) can simply be determined from the discrete values of Q-criterion at neighbouring positions in the simulated flow field.

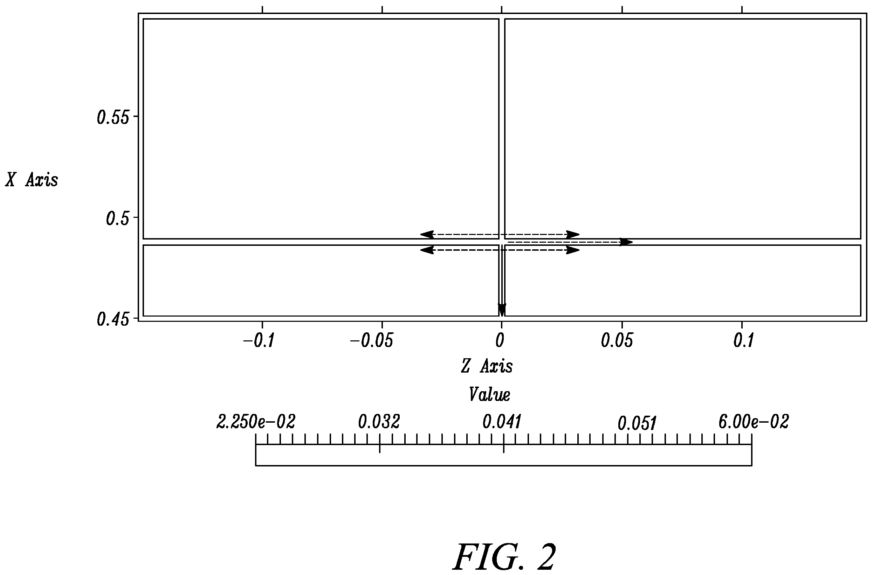

The gradient of Q-criterion corresponds to the direction of the greatest rate of increase of Q-criterion and is not always along the fastest change direction of Q-criterion. An example for a 2D plane is given in Figure 2. Position *p* has a local maximum along the horizontal Z-axis and sits at the junction of four neighbour cells, the boundaries of which are indicated by solid white lines. The gradient at position *p* is shown by the black solid arrow while the fastest change direction is along or opposite to the dashed black arrow. To solve the problem of a local maximum, we calculate the cell-based gradients at position p for the neighbour cells, these gradients being indicated by the dashed grey arrows in Figure 2. The fastest change direction is assumed to be along the cell-based gradients without considering their directions.

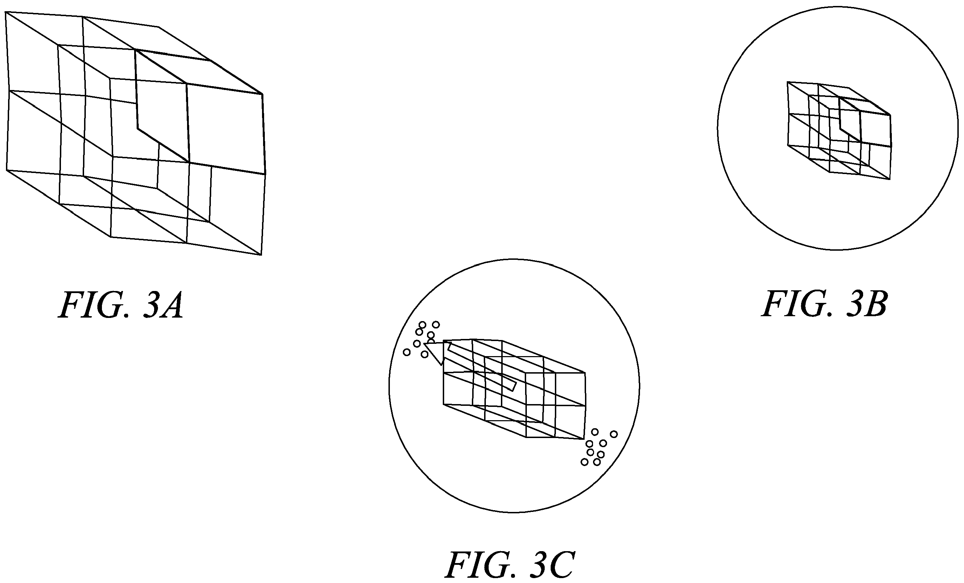

Figures 3A-C demonstrates a process of calculating the fastest change direction of Q-criterion at a position p in the 3D space. For each of the eight neighbour cells of position p shown in Figure 3A, the cell-based gradient at position p can be calculated. The arrow in Figure 3A is the cell-based gradient calculated for the highlighted cell. Each cell-based gradient is then extended in two directions, along the cell-based gradient and opposite to the cell-based gradient, as shown in Figure 3B for the cell of Figure 3A. The extension intersects a p-centered unit sphere at two opposite points. These two intersection points represent the non-directional gradients of the highlighted cell with their magnitudes normalized to 1. To derive the fastest change direction of Q-criterion from all the non-directional cell-based gradients at position p, a PCA technique can be adopted. With the coordinates of all the intersection points as the input, the first principal component returned by PCA is along the fastest change of Q-criterion at *p* in the 3D space. Effectively, the first principal component gives the non-directional average of all the cell-based gradients of *p.* Thus the dots shown in Figure 3C represent all the intersection points, and the white arrow shown in Figure 3C is the first principal component returned by PCA, which equals the primary fastest change direction of Q-criterion at position *p.*

Having determined the primary fastest change direction of Q-criterion at each position, the plane perpendicular to the primary direction at each position can be derived. Within each of these planes, the secondary fastest change direction of Q-criterion can then be calculated in a similar way to the primary fastest change direction of Q-criterion, i.e. by determining the cell-based gradient for each neighbour cell on the plane, extending each gradient in two directions along and opposite the cell-based gradient to intersect a p-centered unit circle at two opposite points, and defining the first principal component returned by PCA for the coordinates of all intersection points as the secondary fastest change direction of Q-criterion.

It is then a straightforward matter to calculate the direction of slowest change of Q-criterion at each position p as being perpendicular to the primary and secondary directions of fastest change at that position.

This procedure is summarised in the inputs, outputs and steps 1-14 of the following algorithm.

Input: Position ***p*** and all its neighbour cells *C*₁, *C*₂, ..., *Cₖ* in the 3D space.

Output: ***v**,* a vector that represents the slowest change direction of Q-criterion at position ***p**.*
1. **for** each neighbour cell *Cᵢ* **do**
2. Compute the cell-based gradient *gᵢ* at position ***p**.*
3. Extend *gᵢ* in two directions, which intersects a ***p***-centered unit ball at 2 points, ***p***_{*i,*1} and ***p***_{*i,*2}.
4. **end for**
5. The coordinates of all the intersection points ***p***_{*i,*1} and ***p***_{*i,*2} (*i* = 1,2,...,*k*) are used as the input of principal component analysis (PCA).
6. The output vector ***v***_{*f*3}*_{D},* which is the first principal component of PCA in Step 5, is along the fastest change direction of Q-criterion in the 3D space.
7. A plane ***pl*** is extracted by using ***v***_{*f*3*D*} as the normal vector at position ***p**.*
8. **for** each neighbour cell *C*_{2*D,j*} of position ***p*** on the plane ***pl* do**
9. Compute the cell-based gradient *gⱼ* at position ***p**.*
10. Extend *gⱼ* in two directions, which intersects a ***p***-centered unit circle at 2 points, ***p***_{*j,*1} and ***p***_{*j,*2}.
11. **end for**
12. The coordinates of all the intersection points ***p***_{*j,*1} and ***p***_{*j,*2} are used as the input of PCA.
13. The output vector ***v**_{f2D},* which is the first principal component of PCA in Step 12, is along the fastest change direction of Q-criterion on the plane ***pl**.*
14. The slowest change direction of Q-criterion is computed as ***v*** = ***v***_{*f*3*D*} × ***v***_{*f*2}*_{D}.*

Steps 1-6 describe the calculation of the fastest change direction of Q-criterion at p in the 3D space (denoted as ***v***_{*f*3*D*}). A plane ***pl*** that is normal to ***v***_{*f*3*D*} is then extracted (Step 7). The slowest change direction of Q-criterion is assumed to be on this plane. A similar process to the 3D case is performed to obtain the fastest change of Q-criterion on plane ***pl*** (Steps 8-13). The slowest change direction is perpendicular to the plane defined by ***v***_{*f*3*D*} and ***v**_{f2D}* (Step 14).

In principle a 2D cross-section can then be extracted for each position p and used for detection of vortices as described in L. Graftieaux, M. Michard, and N. Grosjean, Combining PIV, POD and vortex identification algorithms for the study of unsteady turbulent swirling flows, Measurement Science and Technology, vol. 12, pp1422-1429 (2001). However, a vortex typically swirls around a centreline and positions having the lowest magnitudes of slowest change of Q-criterion generally lie on the centreline. Thus it can be helpful to perform the 2D cross-section extraction for the positions p having these lowest magnitudes.

Embodiments may be described as a process which is depicted as a flowchart, a flow diagram, a data flow diagram, a structure diagram, or a block diagram. Although a flowchart may describe the operations as a sequential process, many of the operations can be performed in parallel or concurrently. In addition, the order of the operations may be rearranged. A process is terminated when its operations are completed, but could have additional steps not included in the figure. A process may correspond to a method, a function, a procedure, a subroutine, a subprogram, etc. When a process corresponds to a function, its termination corresponds to a return of the function to the calling function or the main function.

The term "computer readable medium" may represent one or more devices for storing data, including read only memory (ROM), random access memory (RAM), magnetic RAM, core memory, magnetic disk storage mediums, optical storage mediums, flash memory devices and/or other machine readable mediums for storing information. The term "computer-readable medium" includes, but is not limited to portable or fixed storage devices, optical storage devices, wireless channels and various other mediums capable of storing, containing or carrying instruction(s) and/or data.

Furthermore, embodiments may be implemented by hardware, software, firmware, middleware, microcode, hardware description languages, or any combination thereof. When implemented in software, firmware, middleware or microcode, the program code or code segments to perform the necessary tasks may be stored in a computer readable medium. One or more processors may perform the necessary tasks. A code segment may represent a procedure, a function, a subprogram, a program, a routine, a subroutine, a module, a software package, a class, or any combination of instructions, data structures, or program statements. A code segment may be coupled to another code segment or a hardware circuit by passing and/or receiving information, data, arguments, parameters, or memory contents. Information, arguments, parameters, data, etc. may be passed, forwarded, or transmitted via any suitable means including memory sharing, message passing, token passing, network transmission, etc.

While the invention has been described in conjunction with the exemplary embodiments described above, many equivalent modifications and variations will be apparent to those skilled in the art when given this disclosure. Accordingly, the exemplary embodiments of the invention set forth above are considered to be illustrative and not limiting. Moreover, in determining extent of protection, due account shall be taken of any element which is equivalent to an element specified in the claims. Various changes to the described embodiments may be made without departing from the spirit and scope of the invention.

All references referred to above are hereby incorporated by reference.

## Claims

1. A method of extracting cross-sections for performing vortex detection in a flow volume, the method including the steps of:
(i) providing a simulated flow field for a meshed volume, the flow field providing discrete values of a selected flow parameter at respective positions distributed throughout the volume as determined by the meshing of the volume, the selected flow parameter being one of Q-criterion, vorticity magnitude, velocity magnitude and lambda2;
(ii) calculating, for each position, a direction of slowest change of the selected flow parameter;
(iii) identifying one or more of the positions for 2D cross-section extraction; and
(iv) extracting for the, or each, identified position a respective 2D cross-section from the volume, the extracted cross-section containing the respective identified position and being perpendicular to the calculated direction of slowest change at the respective identified position.

2. A method according to claim 1, wherein in step (i) the simulated flow field provides discrete values of flow velocity at the positions, the selected flow parameter being calculated from the flow velocity.

3. A method according to claim 1 or 2 including a preliminary step of performing a computational fluid dynamics simulation to provide the simulated flow field.

4. A method according to any one of the previous claims, wherein in step (ii) the direction of slowest change is calculated for each position by performing the sub-steps of:
(ii-a) determining, within 3D space, a primary direction of fastest change of the selected flow parameter;
(ii-b) defining a plane perpendicular to the primary direction of fastest change;
(ii-c) identifying, within the plane, a secondary direction of fastest change of the selected flow parameter; and
(ii-d) defining the direction of slowest change such that it is perpendicular to the primary and secondary directions of fastest change.

5. A method according to claim 4, wherein in sub-step (ii-a) the primary direction of fastest change is determined by best-fitting to plural local estimates for the primary direction of fastest change.

6. A method according to claim 5 wherein in sub-step (ii-a) the best-fitting is performed by principal component analysis.

7. A method according to claim 5 or 6, wherein in sub-step (ii-a) the local estimates are obtained for respective neighbour cells of the meshed volume, the neighbour cells each having a vertex at the respective position.

8. A method according to any one of claims 4 to 7, wherein in sub-step (ii-c) the secondary direction of fastest change is determined by best-fitting to plural local estimates for the secondary direction of fastest change.

9. A method according to claim 8 wherein in sub-step (ii-c) the best-fitting is performed by principal component analysis.

10. A method according to claim 8 or 9, wherein in sub-step (ii-c) the local estimates are obtained for respective neighbour cells of the meshed volume, the neighbour cells each having a vertex at the respective position.

11. A method according to any one of the previous claims, wherein in step (iii) the one or more identified positions are the positions from the volume having the lowest magnitude(s) of the rate of change of the selected flow parameter along the direction of slowest change.

12. A process for performing vortex detection in a flow volume, the process including:
performing the method of any one of the previous claims; and
detecting vortices in the, or each, extracted cross-section.
